# EUROPÄISCHE PATENTSCHRIFT

(11) **EP 0 683 813 B1**
(45) Veröffentlichungstag und Bekanntmachung des Hinweises auf die Patenterteilung: **02.05.1997**
(21) Anmeldenummer: 94906206.1
(22) Anmeldetag: 02.02.1994
(51) Int. Cl.: C11D 11/00, C11D 17/06, B01J 2/30, B01J 2/16

(54) **VERFAHREN ZUR HERSTELLUNG VON GRANULATEN**
METHOD OF PRODUCING GRANULATED MATERIALS
PROCEDE POUR LA FABRICATION DE GRANULES

(30) Priorität: 11.02.1993 DE 4304015
(43) Veröffentlichungstag der Anmeldung: 29.11.1995
(73) Patentinhaber: Henkel Kommanditgesellschaft auf Aktien, 40191 Düsseldorf (DE)
(72) Erfinder: BAUER, Volker, D-40589 Düsseldorf (DE); JACOBS, Jochen, D-42349 Wuppertal (DE)
(86) Internationale Anmeldenummer: EP9400300
(87) Internationale Veröffentlichungsnummer: WO9418302

(56) Entgegenhaltungen:
- WO-A-93/04162
- DD-A- 228 458
- DD-A- 251 044
- DE-A- 4 129 074

## Beschreibung

Die Erfindung betrifft die Herstellung von- insbesondere tensidhaltigen Granulaten, die in Wasch-, Spül- oder Reinigungsmitteln eingesetzt werden können.

Die Herstellung von hochkonzentrierten Tensidgranulaten wird beispielsweise in der älteren internationalen Patentanmeldung WO 93/04162 (EP 603 207) offenbart, wobei die Tensidgranulate durch eine Granulierung in der Wirbelschicht hergestellt werden. Dazu wird eine Tensid-Zubereitungsform, die eine nicht-tensidische Flüssigkomponente aufweist, gewünschtenfalls unter Zumischung eines anorganischen oder organischen Feststoffes granuliert und gleichzeitig getrocknet. Die Tensid-Zubereitungsform kann dabei Tenside bzw. Tensidgemische aus der Gruppe der anionischen, nichtionischen, amphoteren und kationischen Tenside, vorzugsweise Aniontenside, insbesondere Fettalkylsulfate, C₉-C₁₃-Alkylbenzolsulfonate und Sulfofettsäuremethylester, und/oder Niotenside, insbesondere flüssige ethoxylierte Fettalkohole mit 2 bis 8 Ethylenoxidgruppen pro Mol Alkohol, enthalten.

In der älteren deutschen Patentanmeldung DE 42 32 874 (EP 663 005) ist ein analoges Granulierverfahren in der Wirbelschicht offenbart, wobei Aniontensidgranulate durch Neutralisation von Aniontensiden in ihrer Säureform dadurch erhalten werden, daß die Aniontenside in ihrer Säureform mit einem pulverförmigen Neutralisationsmittel neutralisiert, dabei gleichzeitig granuliert und die entstehenden Granulate gewünschtenfalls gleichzeitig getrocknet werden. Wiederum kann dabei entweder ein anionisches Tensid in seiner Säureform allein oder ein Tensidgemisch aus der Gruppe der anionischen Tenside in ihrer Säureform in Kombination mit anionischen, nichtionischen, amphoteren und/oder kationischen Tensiden, insbesondere anionischen Tensiden und/oder flüssigen ethoxylierten Fettalkoholen mit 2 bis 8 Ethylenoxidgruppen pro Mol Alkohol, eingesetzt werden.

Die genannten Verfahren führen zu hochkonzentrierten Tensidgranulaten mit vorzugsweise erhöhtem Schüttgewicht. Es können jedoch bei der Verarbeitung niedrig schmelzender und schlecht kristallisierender Aniontenside, wie dies beispielsweise von Alkylbenzolsulfonaten und α-Sulfofettsäuremethylestern bekannt ist, und bei der Mitverwendung relativ hoher Mengen an flüssigen nichtionischen Tensiden Probleme bezüglich der Rieselfähigkeit bzw. der Klebrigkeit der Granulate auftreten.

Die deutschen Patentschriften DD 228 458 Al und DD 251 044 A3 beschreiben ein Verfahren zur Herstellung von tensidhaltigen Granulaten in der Wirbelschicht, wobei im Anschluß an die Granulatbildung zur Reduktion der Klebrigkeit der Granulate und somit zur Reduktion der Verklumpungsneigung der Granulate nach dem Austreten aus der Wirbelschicht die fertigen Granulate noch innerhalb der Wirbelschicht mit einem Feststoff bestäubt werden. Diese Lösung besitzt den Nachteil, daß erhebliche Anteile dieses Feststoffes noch vor dem Austritt aus der Wirbelschicht ins Innere der Granulate eingebaut werden und somit nicht zu ihrer äußeren Beschichtung beitragen können. Außerdem ist dieses Verfahren auf die Zugabe von festen, pulverförmigen Granulatstabilisatoren beschränkt.

Die Aufgabe der Erfindung bestand darin, ein Verfahren zur Herstellung von Granulaten in der Wirbelschicht zu entwickeln, wobei die Granulate mit einem Stabilisator beschichtet werden, der im Verarbeitungszustand fest, aber auch flüssiger bis pastöser Natur sein kann. Eine weitere Aufgabe der Erfindung bestand darin, daß die Granulate vor äußeren Einflüssen, beispielsweise vor chemischen Einflüssen geschützt werden sollten.

Gegenstand der Erfindung ist dementsprechend ein Verfahren zur Herstellung von Granulaten in der Wirbelschicht, wobei im Anschluß an die Granulatbildung zur Reduktion der Klebrigkeit der Granulate ein Granulatstabilisator hinzugegeben wird und die Zugabe des Granulatstabilisators nach dem Austritt der Granulate aus der Wirbelschicht im Abzugsluftstrom erfolgt.

Im Gegensatz zum Stand der Technik werden die Granulatstabilisatoren also nicht innerhalb, sondern außerhalb der Wirbelschicht und direkt im Anschluß an die Wirbelschicht im Abzugsluftstrom zugegeben. Dabei kommt es lediglich zu der gewünschten Beschichtung der Granulatoberfläche, nicht aber zum unerwünschten Einbau der Granulatstabilisatoren in die Granulate. So können in dem erfindungsgemäßen Verfahren Granulatstabilisatoren eingesetzt werden, welche im Verarbeitungszustand fest, flüssig oder pastös sind. Es ist offensichtlich, daß damit ein wesentlicher Vorteil gegenüber dem Stand der Technik bezüglich der Variationsmöglichkeiten der Stabilisatorarten erzielt wird. Es können auch mehrere Stabilisatoren getrennt oder in einer Mischung eingesetzt werden. Dabei ist es bevorzugt, daß mindestens ein Stabilisator bei Temperaturen zwischen Raumtemperatur und 50 °C in fester Form vorliegt. Dabei ist es insbesondere bevorzugt, daß als feste Granulatstabilisatoren Feststoffe, die Wasser aufnehmen können und damit zur inneren Trocknung der Granulate beitragen, eingesetzt werden. Es sind aber auch Granulatstabilisatoren bevorzugt, die zusätzlich zu oder anstelle von den wasseraufnehmenden Feststoffen eingesetzt werden und die eine insbesondere hydrophobierend wirkende Schutzhülle um die Granulate ausbilden, wobei diese Stabilisatoren vorzugsweise in Form einer unter den Verfahrensbedingungen vorliegenden Schmelze aufgebracht werden.

Zu den bevorzugten Granulatstabilisatoren gehören insbesondere ein oder mehrere Feststoffe aus der Gruppe der Wachse, welche vorzugsweise in Form einer Schmelze in den Granulier- und Trocknungsraum eingebracht werden, insbesondere Mikrowachse, beispielsweise ein Mikropulver, das unter der Bezeichnung Hoechst-Wachs C ^{(R)} bei der Firma Hoechst AG, Bundesrepublik Deutschland, erhältlich ist, Zeolithe, insbesondere Zeolith NaA in Waschmittelqualität, Alkalicarbonate, insbesondere Natriumcarbonat in wasserfreier Form, Alkalisulfate, insbesondere Natriumsulfat in wasserfreier Form, amorphe und kristalline Alkalisilikate und natürliche oder synthetische Schichtsilikate, insbesondere Smektite und Bentonite. Dabei werden vorzugsweise feinteilige Feststoffe als Stabilisator eingesetzt, die zu mindestens 90 % aus Teilchen mit einem Durchmesser unterhalb 40 µm bestehen. Die Alkalisilikate sind vorzugsweise amorphe Alkalisilikate mit einem molaren Verhältnis M₂O:SiO₂ von 1:2,0 bis 1:4,5 und insbesondere von 1:2,3 bis 1:4,0, wobei M vorzugsweise für Natrium oder Kalium steht, und/oder kristalline Disilikate, insbesondere in Form der Natriumsalze.

In einer weiteren bevorzugten Ausführungsform der Erfindung werden Tenside oder Tensidmischungen, insbesondere Aniontenside und/oder Aniontenside in ihrer Säureform als Granulatstabilisatoren eingesetzt. Besonders vorteilhaft ist hierbei der Einsatz von gesättigten und/oder ungesättigten Alkoholsulfaten, insbesondere Fettalkoholsulfaten, bzw. von den entsprechenden Säuren, Alkylbenzolsulfonaten bzw. von Alkylbenzolsulfonsäure, α-Sulfofettsäurealkylester bzw. α-Sulfofettsäuren und/oder deren Salzen. Ebenso ist auch der Einsatz von Fettsäuren und/oder deren Salzen, vorteilhafterweise der Einsatz von Stearinsäure bzw. Stearaten, insbesondere von Calciumstearat, bevorzugt. Es können auch Mischungen mit nichtionischen Tensiden eingesetzt werden. Besonders bevorzugt sind dabei alkoxylierte Fettalkohole, Alkylglykoside, Polyhydroxyfettsäureamide und/oder alkoxylierte Fettsäuremethylester. Die Aniontenside oder aniontensidhaltigen Mischungen können dabei beispielsweise gemäß der Lehre der älteren Patentanmeldungen WO 93/04162 (EP 603 207) und DE 42 32 874 EP 663 005 oder gemäß der Lehre der europäischen Patentanmeldung 319 819 hergestellt werden.

Weitere bevorzugte Granulatstabilisatoren, die in vorteilhafter Weise die Löseeigenschaften der Granulate beeinflussen und insbesondere mit mindestens einem weiteren Stabilisator eingesetzt werden, sind Polyethylenglykole mit einer relativen Molekülmasse zwischen 200 und 12000, vorzugsweise mit einer relativen Molekülmasse von mindestens 2000, und/oder alkoxylierte, insbesondere ethoxylierte Fettalkohole mit 20 bis 80 Ethylenoxidgruppen pro Mol Alkohol, vorzugsweise C₈-C₁₈-Fettalkohole mit 20 bis 60 und insbesondere C₁₂-C₁₈-Fettalkohole mit hohen Anteilen an C₁₆- und C₁₈-Fettalkoholen mit 25 bis 45 Mol Ethylenoxid pro Mol Alkohol.

Weitere geeignete Granulatstabilisatoren sind bekannte, nichttensidartige Schauminhibitoren, beispielsweise Silikone, vorzugsweise Organopolysiloxane und deren Gemische mit mikrofeiner, gegebenenfalls silanierter Kieselsäure Paraffinen oder Wachsen. Insbesondere sind lineare oder verzweigte Dimethylsiloxane, die vorteilhafterweise eine relative Molekülmasse zwischen 1000 und 100000 aufweisen, bevorzugt. Dabei besitzen verzweigte Dimethylsiloxane, welche Carboxylat-Gruppen in den Seitenketten aufweisen, besonders vorteilhafte Eigenschaften. Die Silikone werden allein oder mit anderen, vorzugsweise im Gemisch mit anderen Stabilisatoren eingesetzt. Auch Paraffine sind bevorzugt.

Die Granulatstabilisatoren werden nur in geringen Mengen, vorzugsweise in Mengen von 0,1 bis 10 Gew.-% und insbesondere in Mengen von 0,5 bis 4 Gew.-% eingesetzt. Dabei beziehen sich die Mengenangaben jeweils auf das stabilisierte Granulat.

Der eigentliche Granulier- und Trocknungsvorgang kann nach jedem bekannten Wirbelschichtgranulierverfahren, beispielsweise nach dem in den deutschen Patentschriften DD 228 458 Al und DD 251 044 A3 beschriebenen Verfahren durchgeführt werden. Insbesondere sind jedoch solche Verfahren bevorzugt, wie sie in den älteren Patentanmeldungen WO 93/04162 und DE 42 32 874 offenbart werden. Damit werden Granulate erhalten, die einen Tensidgehalt von mindestens 10 Gew.-%, vorzugsweise von 30 bis 80 Gew.-% aufweisen, deren Schüttgewicht zwischen 550 und 1000 g/l beträgt und welche keine Teilchen mit einer Teilchengröße unterhalb 50 µm enthalten.

Die nach dem erfindungsgemäßen Verfahren hergestellten Granulate sind vorzugsweise tensidhaltig. Dabei sind insbesondere solche Granulate bevorzugt, die mehr als 10 Gew.-% Tensid, insbesondere 15 bis 90 Gew.-% anionische und/oder nichtionische sowie gegebenenfalls amphotere, zwitterionische und/oder kationische Tenside enthalten.

Die erfindungsgemäß hergestellten Granulate finden eine bevorzugte Verwendung in Wasch-, Spül- oder Reinigungsmitteln.

### Beispiele

In den Beispielen 1 und 2 sowie dem Vergleichbeispiel V wurde eine 60 Gew.-%ige wäßrige Paste des Natriumsalzes von C₉-C₁₃-Alkylbenzolsulfonat (ABS-Paste) gemäß dem in der älteren Patentanmeldung WO 93/04162 beschriebenen Verfahren über eine Düse in eine Anlage zur Granuliertrocknung (AGT) der Firma Glatt, Bundesrepublik Deutschland, eingebracht, zusammen mit Soda (Natriumcarbonat, Schüttgewicht 600 g/l) granuliert und gleichzeitig getrocknet. Als Startmasse wurde jeweils ein Tensidgranulat eingesetzt, das bei einem vorangegangenen Ansatz (unter denselben Verfahrensbedingungen) gewonnen worden war und in etwa dieselbe Zusammensetzung besaß wie die fertigen Granulate der Beispiele 1, 2 und V.

Verfahrensbedingungen für die Beispiele 1, 2 und V:

| | |
|---|---|
| Wirbelschicht-Durchmesser | 400 mm |
| Wirbelschicht-Fläche | 0,13 m² |
| Wirbelluftgeschwindigkeit (unter Betriebsbedingungen) | 2,0 m/s |
| Bodenlufttemperatur | 163 °C |
| Sichterlufttemperatur | 20 °C |
| Wirbellufttemperatur ca. 5 cm oberhalb der Bodenplatte | 90 °C |
| Luftaustrittstemperatur | 87 °C |

Die Durchsätze und Kenndaten der Produkte können der Tabelle entnommen werden. In den Beispielen 1 und 2 wurden staubfreie (keine Teilchen mit einem Durchmesser unterhalb 50 µm) und nicht klebende Granulate erhalten, während in V eine verklumpende Masse erhalten wurde, deren Teilchengrößenverteilung nicht bestimmt werden konnte.

**Tabelle:**

| Durchsätze und Kenndaten der Produkte | | | |
|---|---|---|---|
| | Beispiele | | |
| | 1 | 2 | V |
| ABS-Paste in kg/h | 24 | 24 | 24 |
| Soda in kg/h | 25,5 | 25,5 | 25,5 |
| Startmasse in kg | 20 | 20 | 20 |
| | | | |

| Stabilisator in kg/h | | | |
|---|---|---|---|
| - Zeolith-Pulver | 1,3 | --- | --- |
| - Polyethylenglykol (relative Molekülmasse 4000) | --- | 1,3 | --- |
| | | | |
| Tensidgehalt in Gew.-% | 32 | 32 | 33 |
| Wassergehalt in Gew.-% | 1,2 | 1,0 | 1,2 |
| Schüttgewicht in g/l | 650 | 640 | nicht bestimmt |
| | | | |

| Siebanalyse in Gew.-% | | | |
|---|---|---|---|
| > 1,6 mm | 23,9 | 25,0 | |
| 0,8 | 60,8 | 57,3 | |
| 0,6 | 11,9 | 8,5 | |
| 0,4 | 2,5 | 4,8 | |
| 0,2 | 0,4 | 3,2 | |
| 0,1 | 0,3 | 1,0 | |
| 0,05 | 0,2 | 0,2 | |
| < 0,05 | --- | --- | |

## Patentansprüche

1. Verfahren zur Herstellung von Granulaten in der Wirbelschicht, wobei im Anschluß an die Granulatbildung zur Reduktion der Klebrigkeit der Granulate ein Granulatstabilisator hinzugegeben wird, dadurch gekennzeichnet, daß die Zugabe des Granulatstabilisators nach dem Austritt der Granulate aus der Wirbelschicht im Abzugs luftstrom erfolgt.

2. Verfahren nach Anspruch 1, dadurch gekennzeichnet, daß als Granulatstabilisatoren im Verarbeitungszustand feste, flüssige oder pastöse Verbindungen eingesetzt werden.

3. Verfahren nach Anspruch 1 oder 2, dadurch gekennzeichnet, daß ein oder mehrere Granulatstabilisatoren getrennt oder in einer Mischung eingesetzt werden.

4. Verfahren nach einem der Ansprüche 1 bis 3, dadurch gekennzeichnet, daß mindestens ein Stabilisator eingesetzt wird, der bei Temperaturen zwischen Raumtemperatur und 50 °C in fester Form vorliegt.

5. Verfahren nach einem der Ansprüche 1 bis 4, dadurch gekennzeichnet, daß als feste Granulatstabilisatoren Feststoffe, die Wasser aufnehmen können, eingesetzt werden.

6. Verfahren nach einem der Ansprüche 1 bis 5, dadurch gekennzeichnet, daß als Granulatstabilisator ein oder mehrere Feststoffe aus der Gruppe der Wachse, vorzugsweise Mikrowachse, Zeolithe, Alkalicarbonate, Alkalisulfate, Alkalisilikate und Schichtsilikate eingesetzt werden.

7. verfahren nach Anpruch 6, dadurch gekennzeichnet, daß die Mikrowachse in Form einer Schmelze in den Granulier- und Trocknungsraum eingebracht werden.

8. Verfahren nach einem der Ansprüche 1 bis 7, dadurch gekennzeichnet, daß als Granulatstabilisatoren Tenside oder Tensidmischungen, vorzugsweise Aniontenside und/oder Aniontenside in ihrer Säureform, insbesondere gesättigte und/oder ungesättigte Alkoholsulfate bzw. deren Säuren, Alkylbenzolsulfonate bzw. Alkylbenzolsulfonsäuren, α-Sulfofettsäurealkylester bzw. α-Sulfofettsäuren und/oder deren Salze sowie Fettsäuren oder Seifen eingesetzt werden.

9. Verfahren nach Anspruch 8, dadurch gekennzeichnet, daß als Granulatstabilisator Calciumstearat eingesetzt wird.

10. Verfahren nach einem der Ansprüche 1 bis 9, dadurch gekennzeichnet, daß als Granulatstabilisator Polyethylenglykole mit einer relativen Molekülmasse zwischen 200 und 12000, vorzugsweise mit einer relativen Molekülmasse von mindestens 2000, und/oder alkoxylierte, insbesondere ethoxylierte Fettalkohole mit 20 bis 80, vorzugsweise C₈-C₁₈-Fettalkohole mit 20 bis 60 und insbesondere C₁₂-C₁₈-Fettalkohole mit hohen Anteilen an C₁₆- und C₁₈-Fettalkoholen und 25 bis 45 Ethylenoxidgruppen pro Mol Alkohol eingesetzt werden.

11. Verfahren nach einem der Ansprüche 1 bis 10, dadurch gekennzeichnet, daß als Granulatstabilisator Silikone, vorzugsweise lineare oder verzweigte Dimethylsiloxane, insbesondere mit einer relativen Molekülmasse zwischen 1000 und 100000, oder Paraffine eingesetzt werden.

12. Verfahren nach einem der Ansprüche 1 bis 11, dadurch gekennzeichnet, daß der oder die Granulatstabilisatoren in Mengen von 0,1 bis 10 Gew.-%, vorzugsweise in Mengen von 0,5 bis 4 Gew.-%, jeweils bezogen auf das stabilisierte Granulat, eingesetzt werden.

13. Granulat, hergestellt nach einem der Ansprüche 1 bis 12, dadurch gekennzeichnet, daß es tensidhaltig ist und vorzugsweise mehr als 10 Gew.-% Tenside, insbesondere 15 bis 90 Gew.-% anionische und/oder nichtionische sowie gegebenenfalls amphotere, zwitterionische und/oder kationische Tenside enthält.

14. Verwendung eines Granulats, hergestellt nach einem der Ansprüche 1 bis 12, in Wasch-, Spül- oder Reinigungsmitteln.

## Claims

1. A process for the production of granules in a fluidized bed, in which a granule stabilizer is added after granulation to reduce the tackiness of the granules, characterized in that the granule stabilizer is added to the waste air stream after the granules have left the fluidized bed.

2. A process as claimed in claim 1, characterized in that compounds which are solid, liquid or paste-like in the processing state are used as the granule stabilizers.

3. A process as claimed in claim 1 or 2, characterized in that one or more granule stabilizers are used separately or in the form of a mixture.

4. A process as claimed in any of claims 1 to 3, characterized in that at least one stabilizer which is solid at temperatures from room temperature to 50°C is used.

5. A process as claimed in any of claims 1 to 4, characterized in that solids capable of absorbing water are used as solid granule stabilizers.

6. A process as claimed in any of claims 1 to 5, characterized in that one or more solids from the group of waxes, preferably microwaxes, zeolites, alkali metal carbonates, alkali metal sulfates, alkali metal silicates and layer silicates are used as the granule stabilizer.

7. A process as claimed in claim 6, characterized in that the microwaxes are introduced in the form of a melt into the granulation and drying zone.

8. A process as claimed in any of claims 1 to 7, characterized in that surfactants or surfactant mixtures, preferably anionic surfactants and/or anionic surfactants in their acid form, more particularly saturated and/or unsaturated alcohol sulfates or acids thereof, alkyl benzene sulfonates or alkyl benzene sulfonic acids, α-sulfofatty acid alkyl esters or α-sulfofatty acids and/or salts thereof and fatty acids or soaps, are used as the granule stabilizers.

9. A process as claimed in claim 8, characterized in that calcium stearate is used as the granule stabilizer.

10. A process as claimed in any of claims 1 to 9, characterized in that polyethylene glycols with a relative molecular weight of 200 to 12,000 and preferably with a relative molecular weight of at least 2,000 and/or alkoxylated, more particularly ethoxylated, fatty alcohols containing 20 to 80, preferably C₈₋₁₈ fatty alcohols containing 20 to 60 and, more particularly, C₁₂₋₁₈ fatty alcohols with high percentages of C₁₆ and C₁₈ fatty alcohols containing 25 to 45 ethylene oxide groups per mole of alcohol, are used as the granule stabilizer.

11. A process as claimed in any of claims 1 to 10, characterized in that silicones, preferably linear or branched dimethyl siloxanes, more particularly with a relative molecular weight of 1,000 to 100,000, or paraffins are used as the granule stabilizer.

12. A process as claimed in any of claims 1 to 11, characterized in that the granule stabilizer(s) is/are used in quantities of 0.1 to 10% by weight and preferably in quantities of 0.5 to 4% by weight, based on the stabilized granules.

13. Granules produced by the process claimed in any of claims 1 to 12, characterized in that they contain surfactants, preferably more than 10% by weight of surfactants, more particularly 15 to 90% by weight of anionic and/or nonionic surfactants and, optionally, amphoteric, zwitterionic and/or cationic surfactants.

14. The use of the granules produced by the process claimed in any of claims 1 to 12 in laundry detergents, dishwashing detergents or cleaning products.

## Revendications

1. Procédé de préparation de granulés en couche fluidisée où en plus de la formation de granulés on ajoute un stabilisant de granulés pour diminuer l'adhésivité des granulés,
caractérisé en ce que
l'addition du stabilisant de granulés a lieu après la sortie des granulés de la couche fluidisée dans le courant d'air de sortie.

2. Procédé selon la revendication 1,
caractérisé en ce qu'
on utilise comme stabilisants de granulés des composés solides, liquides ou pâteux à l'état d'utilisation.

3. Procédé selon la revendication 1 ou 2,
caractérisé en ce qu'
on utilise un ou plusieurs stabilisant de granulés, séparément ou en mélange.

4. Procédé selon l'une des revendications 1 à 3,
caractérisé en ce qu'
on utilise au moins un stabilisant qui est sous forme solide à des températures comprises entre la température ambiante et 50°C.

5. Procédé selon l'une des revendications 1 à 4,
caractérisé en ce qu'
on utilise comme stabilisants solides de granulés, des solides qui peuvent absorber l'eau.

6. Procédé selon l'une des revendications 1 à 5,
caractérisé en ce qu'
on utilise comme stabilisant de granulés un ou plusieurs solides du groupe des cires, de préférence des cires microcristallines, des zéolithes, des carbonates alcalins, des sulfates alcalins, des silicates alcalins ou des silicates feuilletés.

7. Procédé selon la revendication 6,
caractérisé en ce qu'
on incorpore les cires microcristallines sous forme d'une masse fondue dans la chambre de granulation et de séchage.

8. Procédé selon l'une des revendications 1 à 7,
caractérisé en ce qu'
on utilise comme stabilisants de granulés des tensioactifs ou des mélanges de tensioactifs, de préférence des tensioactifs anioniques et/ou des tensioactifs anionique sous leur forme acide, notamment des sulfates d'alcools saturés ou insaturés ou leurs acides, des alkylbenzènesulfonates ou des acides alkylbenzènesulfoniques, des esters alkyliques d'α-sulfoacides gras ou des α-sulfoacides gras et/ou leurs sels ainsi que des acides gras ou des savons.

9. Procédé selon la revendication 8,
caractérisé en ce qu'
on utilise le stéarate de calcium comme stabilisant de granulés.

10. Procédé selon l'une des revendications 1 à 9,
caractérisé en ce qu'
on utilise comme stabilisants de granulés des polyéthylèneglycols ayant de préférence une masse moléculaire relative comprise entre 200 et 12 000, de préférence avec une masse moléculaire relative d'au moins 2 000, et/ou des alcools gras alcoxylés, notamment éthoxylés de 20 à 80, de préférence des alcools gras C₈-C₁₈ avec 20 à 60 et notamment des alcools gras en C₁₂-C₁₈ à teneurs élevées en alcools gras en C₁₆ et C₁₈ et 25 à 45 groupes d'oxyde d'éthylène par mole d'alcool.

11. Procédé selon l'une des revendications 1 à 10,
caractérisé en ce qu'
on utilise comme stabilisant de granulés des silicones, de préférence des diméthylsiloxanes linéaires ou ramifiés, notamment ayant une masse moléculaire relative comprise entre 1 000 et 100 000, ou des paraffines.

12. Procédé selon l'une des revendications 1 à 11,
caractérisé en ce qu'
on utilise le ou les stabilisants de granulés en des quantités de 0,1 à 10 % en poids, de préférence en des quantités de 0,5 à 4 % en poids, rapportées respectivement au granulé stabilisé.

13. Granulé, préparé selon l'une des revendications 1 à 12,
caractérisé en ce qu'
il contient du tensioactif et de préférence plus de 10 % en poids de tensioactifs, notamment 15 à 90 % en poids de tensioactifs anioniques et/ou non ioniques ainsi que le cas échéant des tensioactifs amphotères, zwitterioniques et/ou cationiques.

14. Utilisation d'un granulé préparé selon l'une des revendications 1 à 12 dans des produits pour la lessive, le rinçage ou le nettoyage.
